Europäisches Patentamt

(19) European Patent Office   (11) Publication number: **0 005 960**

Office européen des brevets   **B1**

(12)   **EUROPEAN PATENT SPECIFICATION**

(45) Date of publication of patent specification: **02.09.81**   (51) Int. Cl.³: **B 65 D 90/00, B 60 P 7/06, B 62 D 33/04**

(21) Application number: **79300924.2**

(22) Date of filing: **24.05.79**

(54) Load carrying decks.

(30) Priority: **25.05.78 GB 2231978**

(43) Date of publication of application:
**12.12.79 Bulletin 79/25**

(45) Publication of the grant of the European patent:
**02.09.81 Bulletin 81/35**

(84) Designated Contracting States:
**DE GB IT NL**

(56) References cited:
**US - A - 3 897 971**
**US - A - 3 911 832**

(73) Proprietor: **BKL EXTRUSIONS LIMITED**
**Factory Centre Kings Norton**
**Birmingham B30 3HF (GB)**

(72) Inventor: **White, Colin Martin**
**112, Atcham Close Winyates**
**Redditch Worcestershire (GB)**
Inventor: **Denham, Anthony John**
**121, Bromford Road**
**Birmingham B36 8HR (GB)**

(74) Representative: **Robertson, Bernard Collett et al,**
**Guest, Keen & Nettlefolds Limited Group Head**
**Office P.O. Box 55**
**Smethwick, Warley West Midlands B66 2RZ (GB)**

Courier Press, Leamington Spa, England.

Load carrying decks

This invention relates to a fold-away deck structure for use in a storage container. The container may be the load carrying part of a vehicle such as a box van or other truck or lorry.

Such a container may often be used to carry around articles of a relatively low height which can not be stacked on top one one another due to their shape or because they are fragile. A single layer of articles on the floor of the container leaves much of the capacity of the container unused.

One way of overcoming this problem is to provide a removeable deck which can be placed part way up the height of the container so that some articles can be stored on the floor of the container and others on the deck. In order to maintain the facility for carrying larger articles, the deck should be removeable. Complete removal of the deck is unsatisfactory in that the deck may not then be available when required. An alternative which has been proposed in United States Patent Specification 3,911,832 is for the deck to be foldable to a position at the edge of the container. When the articles to be carried are fragile and should not be allowed to come into contact with an unpadded interior of a container, it has previously been proposed to provide padding around the edges of the container. However, with a fold away deck, the deck would cover any padding and leave the necessarily rigid upper surface of the deck exposed to the interior of the container.

A fold-away deck for a container in accordance with the invention comprises a hinge for pivotally mounting the deck to an interior wall of the container, the deck comprising two portions which are articulated with respect to each other such that when the deck is folded away the top surface of one portion is exposed on the side of the folded deck away from the hinge and towards the interior of the container, characterised by the provision of a flap hinged to said one portion and comprising a deck surface and a buffer surface, said flap being moveable between a first position in which the deck surface is generally flush with and forms part of the top surface and a second position in which the buffer surface is exposed towards the interior of the container.

Preferably each portion of the deck comprises two generally parallel spaced elongate members with a sheet member secured to a flange on each elongate member.

Preferably the flap extends between the elongate members of the one portion and is supported on the flanges of said one portion when the flap is in the first position.

The invention will now be described, by way of example only, with reference to the accompanying drawings in which:

Figure 1 is a perpective view of a deck in accordance with the invention;

Figure 2 is an elevational view of a portion of the deck of Figure 1 showing the flap; and

Figure 3 is a elevational view of the deck as it is positioned within a container.

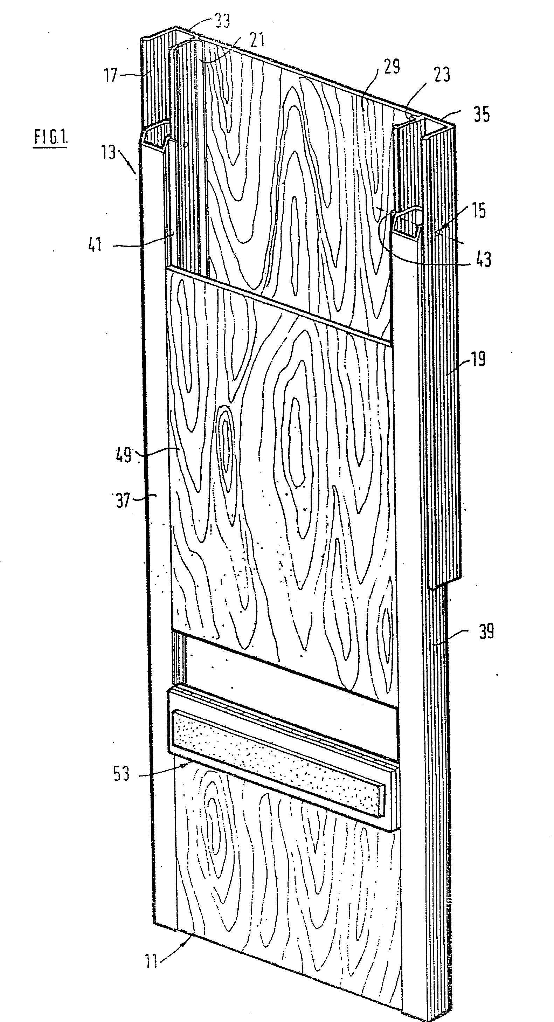

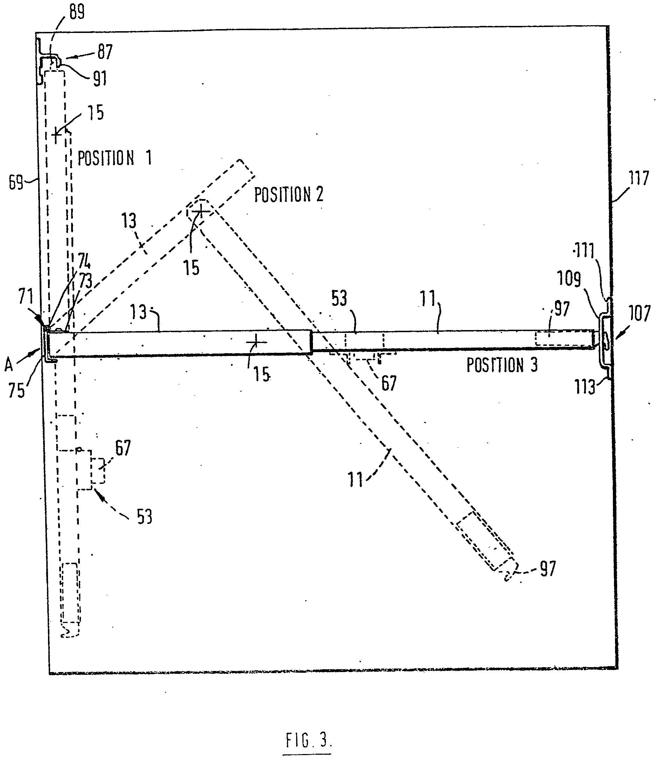

A number of decks such as shown in Figure 1 are intended to be placed side by side within a container such as the load compartment of a box van which is illustrated diagrammatically as 117 in Figure 3. Each deck has an outer deck section 11 and an inner deck section 13. The two deck portions are hinged to each other about an axis 15 and to the inside surface of the container about an axis 71 to enable the deck to be stowed at the edge of the container as shown in position 1 in Figure 3 or to extend across the container as shown in position 3. When a series of decks are arranged across a container as shown in Figure 3, it is possible to load both the floor of the container and the deck with articles to be carried and for certain articles this can substantially increase the carrying capacity of the container.

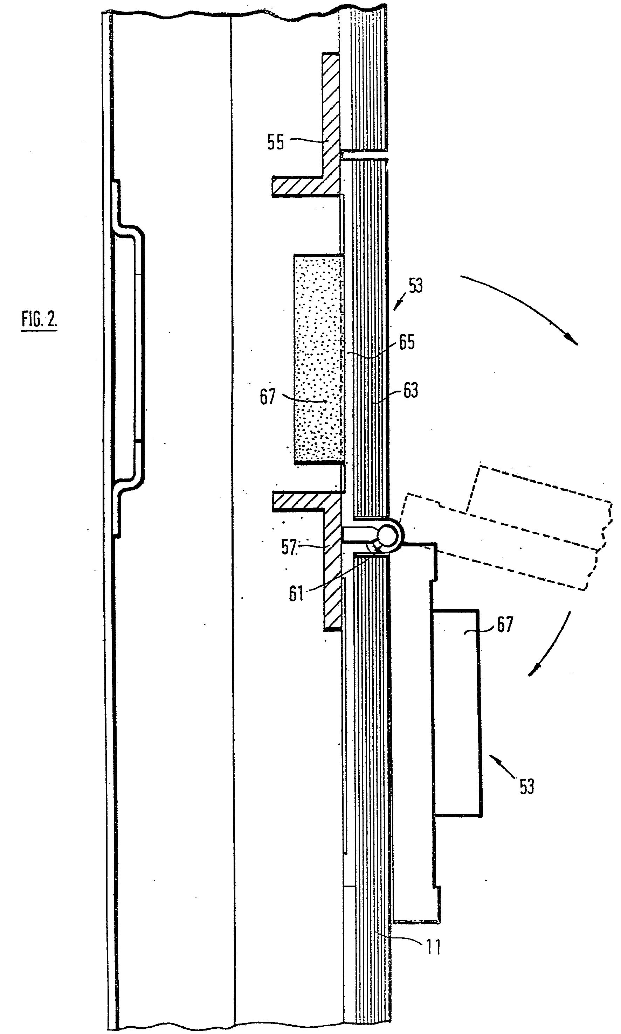

The deck itself will now be described in greater detail with reference to Figures 1 and 2. The outer deck portion 11 and inner deck portion 13 are hinged together about a pivot axis 15. The inner deck portion 13 comprises two parallel elongate members 17 and 19 which are generally U section aluminium extrusions. Each elongate member 17 and 19 has an inwardly directed flange 21, 23 respectively. a plywood sheet member 29 extends between the two elongate members 17 and 19 and is secured by rivets (not shown) to flanges 21 and 23 to join the elongate members together and to provide a deck surface. Flanges 21 and 23 are so positioned that the deck surface of sheet 29 is flush with the bases 33 and 35 of the elongate members so that these members also form part of a deck surface. The outer deck portion 11 is of similar construction to the inner deck portion 13. It comprises two parallel spaced elongate aluminium extrusions 37 and 39 with inwardly directed flanges 41 and 43. Elongate members 37 and 39 are narrower than members 17 and 19 and fit within these latter members. A plywood sheet member 49 joins members 37 and 39 by their flanges 41 and 43 and is flush with the bases of the members 37 and 39. The two deck members 11 and 13 are joined together at the axis 15 by hinge pins passing through openings in the sides of the elongate members. The location of the hinge pins and the shape of the end portion of members 37 and 39 are such that the two deck members 11 and 13 can be pivoted from the closed parallel position shown in Figure 1 through 180 degrees to an open parallel position where together they form a continuous deck.

A buffer flap 53, shown in greater detail in figure 2 than in Figure 1, is provided within the plywood sheet member 49. Two angle brackets 55 and 57 extend transversely across the outer deck member 11 at the extremities of an opening in the plywood sheet 49 provided for the buffer stop. At the angle bracket 57, which is the lower angle bracket when the deck is in a vertical position, the buffer flap 53 is hinged by means of a hinge 61 to the remaining part of the deck.

The flap 53 consists of an aluminium base 65 which supports a plywood section 63 and a rubber buffer 67. In the position of the flap where it is shown in detail in Figure 2, the plywood section 63 lies flush with and forms part of the deck surface. The rubber buffer is in the lower or inner side of the deck. When used as part of the deck surface, the flap 53 is supported with respect to the main body of the deck by its hinge 61 at one side and by the angle bracket 55 at the other side and along both edges by flanges 41 and 43. The flap 53 can swing from the position shown in detail through the position shown in dotted outline to the position shown in full outline. In this latter position, the rubber buffer 67 is exposed on the outer side of the deck and projects well beyond the general deck surface.

Referring to Figure 3 in greater detail, the assembly is shown in three different positions. Position 1 is the vertical position in which the deck portions 11 and 13 are folded together and lie against the side wall 69 of the container. This leaves substantially the whole of the interior of the container available for large or bulky articles. Position 3 shows the deck in a horizontal position across the container and in this position some articles may be loaded on the floor of the container and other articles on the deck. Position 2 is an intermediate position to illustrate the nature of movement between positions 1 and 3.

The various catches and mounting hinges by which the deck is positioned with the container 117 will now be described.

The pivotal mounting of the inner deck portion 13 to the side wall of the container is by means of a hinge 71 which consists of two plates 73 and 75 united by a hinge pin 74. Plate 73 is generally planar and is bolted to the top surface of the inner deck portion 13. The other plate 75 is of generally L-shape with the side of the L secured to the side wall of the container and the base of the L helping to support the load of the deck, particularly if free play develops in the hinge. The hinge is such that the inner portion 13 of the deck can pivot between the vertical position 1 and the horizontal position 3 of Figure 3.

The deck can be held in its vertical position by co-operation between a locking rail 87 and a pair of spring loaded catches 89 arranged one in each longitudinal member 17 or 19 but not shown in Figure 1. Each catch 89 is slidable in its elongate member 17 or 19 and is spring loaded outwardly to the position shown in Figure 3. The catch can be retracted within the elongate member against the spring loading. The catch 89 engages behind a hooked end 91 of the bracket 87 and thereby retains the inner deck portion 13 in a vertical position. The outer deck portion 11 then naturally hangs vertically adjacent the side wall of the container but may in addition be secured by straps or ropes to the side of the container.

In order to move the deck from its vertical folded position 1 of Figure 3 to the horizontal position 3 of Figure 3 and to retain it in the horizontal position, a pair of catches at the outer or lower end of the outer deck portion 11 are used. The side wall of the container 117 is equipped with a longitudinally extending extruded aluminium track 107 which is of top hat section with a central portion 109 and two outer flanges 111 and 113. The flanges 111 and 113 are secured to the side wall of the container leaving the central portion 109 clear of the side wall. A series of vertical slots are provided in the rail. This type of rail is provided for a variety of purposes in a conventional box van. For example, it assists in stiffening the flat sides of the container and due to the slots provides a convenient means for securing ropes and/or hooks to prevent articles moving around within the container. With this invention, two of the slots are engaged by hook members 97 which are positioned within the elongate members 37 and 39 of the outer deck portion and project from the outer end. These hook members are spring loaded into the interior of the elongate members of outer deck member 11.

Thus in order to secure the deck in position 3 of Figure 3, the catch 89 is retracted to release the inner deck portion 13, the inner deck portion 13 is lowered and the outer deck portion 11 is raised through the position shown in Figure 2 until the hook members 97 engage in a slot in the rail 107. Slight retraction of the hook member may be necessary to enter it into its slot. The central part of the deck is prevented from dropping below the horizontal position due to the fact that the pivot axis 15 is a considerable distance along the inner deck portion 13 from its outer end and the associated overlap between the elongate members of the inner and outer portions of the deck.

In position 3, the buffer flap 53 can be folded over so as to close the opening in the deck and provide a continuous deck surface for supporting a second layer of articles above a layer of articles on the floor of the container. In position 1, the flap 53 automatically swings down and out to expose the rubber buffer 67. Thus when the container is to be used for taller articles which require the deck to be stored in position 1, the buffer prevents such articles from rubbing against sharp edges associated with other parts of the deck and thereby protects the article against damage. As a further security measure, straps or ropes may be used to hold articles against the rubber buffer 67, such ropes being attached to appropriate locations at the side of the container through the opening left by the buffer stop.

## Claims

1. A fold away deck for a container (117) comprising a hinge (71) for pivotally mounting the deck to an interior wall (69) of the container, the deck comprising two portions (11, 13) which are articulated with respect to each other such that when the deck is folded away the top surface of one portion (11) is exposed on the side of the folded deck away from the hinge and towards the interior of the container, characterised by the provision of a flap (53) hinged to said one portion (11) and comprising a deck surface (63) and a buffer surface (67), said flap being moveable between a first position in which the deck surface is generally flush with and forms part of the top surface and a second position in which the buffer surface is exposed towards the interior of the container.

2. A fold away deck as claimed in Claim 1 wherein each deck portion (11, 13) comprises two generally parallel spaced elongate members (17, 19, 37, 39) with a sheet member (29, 49) secured to a flange (21, 23, 41, 43) of each elongate member.

3. A fold away deck as claimed in Claim 2 wherein the flap extends between the elongate members (37, 39) of the one portion and is supported on the flanges (41, 43) of said one portion when the flap is in the first position.

## Revendications

1. Plan de support étagère repliable pour enceinte d'emmagasinage (117) comprenant une charnière (71) pour le montage à pivotement du plan de support sur une paroi intérieure (69) de l'enceinte, le plan de support comprenant deux parties (11, 13) mutuellement articulées de façon que lorsque le plan de support est replié, la surface de dessus d'une première des parties précitées (11) se trouve exposée du côté du plan de support escamoté opposé à la charnière et est tournée vers l'intérieur de l'enceinte, caractérisé en ce qu'il comprend un volet (53) articulé à la première partie (11) et comprenant une surface de support (63) et une surface de tampon (67), ce volet étant mobile entre une première position dans laquelle la surface de support est sensiblement dans le prolongement de la surface de dessus et fait partie de celle-ci, et une deuxième position dans laquelle la surface de tampon est exposée face à l'intérieur de l'enceinte.

2. Plan de support selon la revendication 1, caractérisé en ce que chacune des parties (11, 13) précitées comprend deux éléments allongés (17, 19, 37, 39) sensiblement parallèles et espacés, et une plaque (29, 49) fixée à une aile (21, 23, 41, 43) de chaque élément allongé.

3. Plan de support selon la revendication 2, caractérisé en ce que le volet s'étend entre les éléments allongés (37, 39) de la première partie et repose sur les ailes (41, 43) de celle-ci lorsque le volet est dans la première position.

## Patentansprüche

1. Zusammenklappbare Plattform für einen Behälter (117) mit einem Scharnier (71) zur schwenkbaren Befestigung der Plattform an einer Innenwand (69) des Behälters, wobei die Plattform aus zwei Abschnitten (11, 13) besteht, die gelenkig miteinander verbunden sind, dergestalt, daß wenn die Plattform zusammengeklappt ist, die Oberfläche des einen Abschnittes (11) auf der dem Scharnier abgewandten Seite der zusammengeklappten Plattform und in Richtung auf den Innenraum des Behälters freiliegt dadurch gekennzeichnet, daß eine Klappe (53) vorgesehen ist, die durch ein Scharnier mit dem genannten Abschnitt (11) verbunden ist und eine Plattformfläche (63) und eine Pufferfläche (67) enthält, wobei die genannte Klappe zwischen einer ersten Stellung, in der die Plattformfläche im allgemeinen in einer Flucht mit der genannten Oberfläche liegt und einen Teil davon bildet, und einer zweiten Stellung, in der die Pufferfläche in Richtung auf den Innenraum des Behälters freiliegt, beweglich ist.

2. Zusammenklappbare Plattform nach Anspruch 1, dadurch gekennzeichnet, daß jeder Plattformabschnitt (11, 13) zwei im allgemeinen parallel verlaufende längliche Körper (17, 19, 37, 39) enthält, wobei eine dünne Platte (29, 49) an dem Flansch (21, 23, 41, 43) eines jeden länglichen Körpers befestigt ist.

3. Zusammenklappbare Plattform nach Anspruch 2, dadurch gekennzeichnet, daß sich die Klappe zwischen den länglichen Körpern (37, 39) des einen Abschnittes erstreckt und von den Flanschen (41, 43) des genannten einen Abschnittes gehalten wird, wenn, sich die Klappe in der ersten Stellung befindet.

0 005 960

FIG.1.

1

FIG. 2.

FIG. 3.